# EUROPÄISCHE PATENTANMELDUNG

(11) **EP 2 559 674 A1**
(43) Veröffentlichungstag der Anmeldung: **20.02.2013**
(21) Anmeldenummer: 11006757.6
(22) Anmeldetag: 18.08.2011
(51) Int. Cl.: C04B 7/32, C04B 7/345

(54) **Ternesit-Belit-Calciumsulfoaluminat-Klinker und Verfahren zu seiner Herstellung**

(71) Anmelder: HeidelbergCement AG, 69120 Heidelberg (DE)
(72) Erfinder: Bullerjahn, Frank, 69123 Heidelberg (DE); Schmitt, Dirk, 69181 Leimen (DE); Ben Haha, Mohsen, 69117 Leimen (DE)
(74) Vertreter: Wagner, Jutta

(57) **Zusammenfassung**

Die vorliegende Erfindung betrifft einen Ternesit-Belit-Calciumsulfoaluminat(Ferrit) Klinker, seine Herstellung und seine Verwendung als hydraulisch reaktives Bindemittel. Die Erfindung betrifft auch die Verwendung alternativer Rohstoffe, z.B. Rohstoffe auf Basis industrieller Nebenprodukte, unter anderem geringer Qualität, wie zum Beispiel Stückschlacken und Aschen mit geringem Glas- und /oder hohen Freikalkgehalt und / oder hohen Gehalt an kristallinen Hochtemperaturphasen, sowie natürlich vorkommenden Gesteinen und Gesteinsgläsern vergleichbarer chemischer Zusammensetzung zur Klinkerherstellung. Des Weiteren betrifft die Erfindung die Verwendung des Bindemittels als Dichtwandmasse und zur Immobilisierung von Schadstoffen, insbesondere von Schwermetallen.

## Beschreibung

Die vorliegende Erfindung betrifft einen Ternesit-Belit-Calciumsulfoaluminat(Ferrit)-Klinker (TBC$A(F)), seine Herstellung und seine Verwendung als hydraulisch reaktives Bindemittel. Die Erfindung betrifft weiter die Verwendung alternativer Rohstoffe, z.B. Rohstoffe auf Basis industrieller Nebenprodukte, unter anderem geringer Qualität, wie zum Beispiel Stückschlacken und Aschen mit geringem Glas- und / oder hohem Freikalkgehalt und / oder hohem Gehalt an kristallinen Hochtemperaturphasen, sowie natürlich vorkommenden Gesteinen und Gesteinsgläsern vergleichbarer chemischer Zusammensetzung zur Klinkerherstellung. Des Weiteren betrifft die Erfindung die Verwendung des Bindemittels als Dichtwandmasse und zur Immobilisierung von Schadstoffen, insbesondere von Schwermetallen.

Die Zementindustrie hat einen erheblichen Anteil an der globalen CO₂-Produktion. Die weltweit wachsende Nachfrage nach Zement vor allem in Entwicklungsländern sowie steigende Kosten für Rohstoffe, Energie und CO₂-Zertifikate führten in den letzten Jahren zur zunehmenden Verringerung des Klinkerfaktors, zum Beispiel durch eine Zugabe von Kalksteinmehlen, Flugaschen und granulierten Hüttensanden als Klinkerersatzstoffe. Diese Verwendung von Nebenprodukten und Abfallprodukten anderer Industrien sowie die Entwicklung alternativer Bindemittel rücken zunehmend in den Fokus des politischen, wissenschaftlichen und wirtschaftlichen Interesses.

Weltweit fallen im Zuge der thermischen Abfallbeseitigung / Energiegewinnung, Stahlerzeugung, Edelmetallgewinnung etc., enorme Mengen an Materialien an, die im folgenden als industrielle Nebenprodukte bezeichnet werden. Je nach Qualität / Zusammensetzung / Anwendungsgebiet können diese teilweise oder vollständig in verschiedenen Prozessen und Produkten wiederverwendet werden, z.B. als Korrektiv zur Klinkerherstellung von Portlandzement, als Additiv für Beton und als Zuschlag für Asphalt und Beton, etc.

Aufgrund verschiedener Faktoren, wie zum Beispiel der fehlenden Gleichmäßigkeit (Chemismus und Mineralogie) und der Schadstoffgehalte (Organik, Schwermetalle, etc...), ist die Verwendung der industriellen Nebenprodukte aber nicht unproblematisch. Unter anderem kann eine sinkende Reaktivität / Qualität von OPC-Klinker bzw. eine mangelnde Raumbeständigkeit von Zementen dazu führen, dass jährlich große Mengen solcher Materialien kostenintensiv deponiert bzw. als Haldenmaterial und Deponiematerial herangezogen werden müssen. Aber Schwierigkeiten können auch bei der Deponierung solcher Materialien auftreten, z.B. können Auslaugungsprozesse zur Kontamination der umliegenden Flächen und Gewässer / Grundwässer führen.

Die Verwendung / Aufbereitung industrieller Nebenprodukte stellt daher eine große Herausforderung und eine noch immer nicht gelöste Aufgabe dar. Eine möglichst effiziente und nachhaltige Ressourcennutzung wird zukünftig unverzichtbar sein und besitzt eine globale Relevanz.

Neben der Substitution von Klinker im Zement und von Rohstoffen in der Rohmehlmischung wurde auch versucht, andere hydraulisch härtende Bindemittel zu finden. Hierzu zählen Sulfoaluminatzemente und Zemente mit Belit als Hauptkomponente.

Um die weitere Beschreibung zu vereinfachen, werden folgende in der Zementindustrie üblichen Abkürzungen verwendet:
H - H₂O
C - CaO
A - Al₂O₃
F - Fe₂O₃
M - MgO
S - SiO₂
$ - SO₃.

Um die weitere Beschreibung zu vereinfachen werden zumeist Verbindungen in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Rohmehls und der Art der Herstellung, durch die Substitution mit diversen Fremdionen variieren, wobei solche Verbindungen ebenfalls in den Schutzbereich der vorliegenden Erfindung fallen.

### Stand der Technik

Calciumsulfoaluminatzement wird großtechnisch üblicherweise durch die Sinterung homogenisierter, feinteiliger, natürlicher Rohstoffe, wie Kalkstein, Bauxit, Gips / Halbhydrat / Anhydrit, aluminiumreicher Ton und einer SiO₂-Quelle, in einem Drehrohrofen zwischen 1100 °C - 1350 °C hergestellt und weist einen signifikant unterschiedlichen Chemismus und Phasengehalt im Vergleich zu Portlandzement auf. In Tabelle 1 sind die in Portlandzement (OPC) und Sulfoaluminatzement (BC$AF) vorliegenden Phasen gegenübergestellt. Auch beim Sulfoaluminatzement können verschiedene industrielle Nebenprodukte wie z.B. Hüttensand und Flugaschen dem Rohmehl zugesetzt werden.

Ein entscheidender, hydraulisch aktiver Bestandteil von CalciumsulfoaluminatZement ist ein (Misch)Kristall der Verbindungen folgender Zusammensetzung 3 CaO • 3 Al₂O₃ • CaSO₄ - 3 CaO • 3 Fe₂O₃ • CaSO₄ (C₄A₃$ - C₄F₃$; Sulfoaluminat-Sulfoferrit, Ye'elimit), welcher nach dem Anmachen mit Wasser und in Gegenwart von löslichen Sulfaten und zusätzlichen Calciumträgern zu Ettringit, 3 CaO • (Al₂O₃ / Fe₂O₃) • 3 CaSO₄ • 32 H₂O, sowie verschiedenen Monophasen reagiert. Die sich bildendenden (Hydrat)Phasen (z.B. Ettringit [AFₜ], Monophasen [AFₘ] etc.) können eine Vielzahl verschiedener (Schad)Stoffe, durch z.B. den Einbau in die Kristallstruktur der Hydratphase, Anlagerung an Partikeloberflächen, Fixierung im Zementleim, Ausfällung als z.B. Hydroxide / Karbonate, etc., binden und dauerhaft fixieren. Zwei weitere hydraulisch aktive Phasen des Calciumsulfoaluminatzements sind Dicalciumsilicat (C₂S) und Tetracalciumaluminatferrit (C₄AF), welche jedoch vorrangig zur Endfestigkeit beitragen.

**Tabelle 1: Chemismus und Mineralogie von OPC im Vergleich zu BC$AF**

| | Temperatur [°C] | Chem. Zusammensetzung [%] | Miner. Zusammensetzung [%] |
|---|---|---|---|
| | | | C₃S [ 50-70 ] |
| | | CaO [55-75] | C₂S [ 10-40 ] |
| | | SiO₂ [ 15-25 ] | C₃A [0-15] |
| OPC | ∼1450 | Al₂O₃ [2-6] | C₄AF [0-20] |
| | | Fe₂O₃ [ 0-6 ] | C$ [2-10] |
| | | SO₃ [1.5-4.5] | C [0-3] |
| | | | Cc [0-5] ] |
| | | CaO [40-70] | C₂S [2-70] |
| | | SiO₂ [2-40] | C₄A₃$ [10-75] |
| BCSAF | ∼1250 | Al₂O₃[5-40] | C₄AF [0-30] |
| | | Fe₂O₃ [0-15] | C$ [5-30] |
| | | SO₃ [5-25] | Nebenphasen |

EP 0 838 443 A1 beschreibt die Herstellung von Calciumsulfoaluminat - Zement, ausgehend von Aluminium enthaltenden Reststoffen.

DE 196 44 654 A1 beschreibt die Herstellung eines Calciumsulfoaluminat - Zements aus aufbereiteten Salzschlacken.

FR 2 928 643 beschreibt die Herstellung und Zusammensetzung eines Belit-Calciumsulfoaluminat(Ferrit) - Klinkers aus einer Mischung mit Mineralen, die Kalzium, Aluminium, Silizium, Eisen und Schwefel, vorzugsweise in Form von Sulfat, enthalten. Die Sinterung der Rohmehlmischung erfolgt durch das Durchlaufen eines Brennofens mit einer Durchlaufzeit von mindestens 15 Minuten.

FR 2 946 978 beschreibt die Herstellung und Zusammensetzung eines Belit-Calciumsulfoaluminat(Ferrit) - Klinkers aus einer Mischung verschiedener Rohstoffe.

EP 1 171 398 B1 (DE 600 29 779 T2) beschreibt die Tieftemperatursinterung spezifischer Mischungen aus Rohmaterialien, um im Ofen Spezialklinker zu produzieren, die hohe Konzentrationen an Kristall X = {(C, K, N, M)₄(A, F, Mn, P, T, S)₃(Cl, $)} und Kristall Y = {(C₂S)₃(CS)₃Ca(f, cl)₂} oder C₉S₃$Ca(f, cl)₂ und/oder Kristall Z = {C₅S₂$} aufweisen. Diese Klinker werden mit hydraulischem Zement oder Zement vom Typ Portland gemischt, um fertige Zementzusammensetzungen zu produzieren.

Aufgabe der Erfindung war die Bereitstellung eines hydraulisch reaktiven Klinkers und eines Verfahrens zur Herstellung von Klinker, welcher weniger negativen Einfluss auf die Umwelt hat, indem industrielle Nebenprodukte einen großen Teil der Rohmehlmischung ausmachen können und/oder die Herstellung weniger CO₂ freisetzt.

Es wurde nun überraschend gefunden, dass die Phase C₅S₂$ (Ternesit, auch als Sulfospurrit bezeichnet) eine signifikant reaktive Komponente in speziellen Sulfoaluminatzementen darstellt. In der Literatur (siehe z.B. "Synthesis of Calcium Sulfoaluminate Cements From Al2O3-Rich By-products from Aluminium Manufacture", Milena Marroccoli et al., The second international conference on sustainable construction materials and technologies 2010, "Synthesis of Special Cements from Mixtures Containing Fluidized Bed Combustion Waste, Calcium Carbonate and Various Sources of Alumina", Belz et al, 28th Meeting of the Italian Section of The Combustion Institute 2005, "Fluidized Bed Combustion Waste as a Raw Mix Component for the Manufacture of Calcium Sulphoaluminate Cements", Belz G et al, 29th Meeting of the Italian Section of The Combustion Institute, 2006 und "The Fabrication of Value Added Cement Products from Circulating Fluidized Bed Combustion Ash", Jewell R.B et al, World of Coal Ash (WOCA) Covington, Kentucky, USA, 2007) wird die Phase C₅S₂$ als wenig reaktiv bzw. inert und unerwünscht beschrieben. Des Weiteren werden regelmäßig Methoden aufgezeigt diese "unerwünschte Phase" zu vermeiden. Überraschenderweise hat sich bei unseren Versuchen gezeigt, dass eine signifikante Menge dieser Phase C₅S₂$ schon innerhalb der ersten Tage der Hydratation reagiert und die Phasenzusammensetzung der hydratisierten Proben signifikant beeinflusst.

Die obige Aufgabe wird daher gelöst durch einen Calciumsulfoaluminat - Klinker mit der reaktiven Phase C₅S₂$ als einer Hauptkomponente. Des weiteren wird die Aufgabe durch ein Verfahren zur Herstellung dieses Klinkers gelöst, bei dem durch die Optimierung der Sinterung der Rohmehlzusammensetzung in Abhängigkeit von den gewählten Rohstoffen und der Zusammensetzung der Rohmehlmischung diese Phase in größeren Mengen gebildet wird. Die Rohmehlmischung wird bei mindestens 1200 °C, vorzugsweise im Bereich von 1200 °C bis 1350 °C und noch stärker bevorzugt bei 1250 °C bis 1300 °C gebrannt, um vorhandene /sich bildende unerwünschte Phasen, wie zum Beispiel solche aus der Melilith-Gruppe, wieder zu zersetzen und / oder um kristalline Hochtemperaturphasen verschiedener Rohstoffe, wie zum Beispiel Melilith, Mullit, Pyroxen / Klinopyroxen, Spinell, etc., in die gewünschten reaktiven Phasen des Klinkers umzusetzen. Ein besonderer Schritt, welcher signifikant vom aktuellen Stand der Technik abweicht, ist die anschließende gezielte Temperung durch Steuerung der Temperatur während einer Abkühlung im Ofenraum sowie im jeweiligen Kühlersystem. Durch die gezielte Temperatursteuerung beim Abkühlvorgang durchläuft der gebrannte Spezialklinker für eine Zeitspanne, die ausreichend ist, um den erfindungsgemäßen Klinker zu bilden, während der Kühlung einen Temperaturbereich von 1200 °C bis zu einer unteren Grenze von 750 °C, vorzugsweise einen Bereich von 1150 bis 850 °C, und wird erst anschließend rapide abgekühlt. Es hat sich des weiteren gezeigt, dass verschiedene Aluminat- und Ferratphasen sowie Relikte der kristallinen Hochtemperaturphasen der Rohstoffe, wie zum Beispiel, aber nicht ausschließlich, C₄AF, C₂F, CF, C₃A, CA, CA₂, C₁₂A₇, A₃S₂, C₂AS, etc., während des geregelten Kühlungsvorganges bei der Temperung mit vorhandenem C$ reagieren und zur Zunahme der gewünschten reaktiven Phasen C₅S₂$ und C₄(AₓF₁₋ₓ)₃$ führen.

Des weiteren werden Verwendungsmöglichkeiten für industrielle Nebenprodukte aufgezeigt, was folgende Vorteile hat:
(1) Vermeidung von Deponien / Haldenmaterial
(2) ökonomisch / ökologische Verwendung dieser Materialien;
(3) Fixierung / Zerstörung möglicher Schadstoffe.

Die EP 1 171 398 B1 beschreibt die Herstellung eines Spezialklinkers in einem Temperaturbereich von 900 °C bis maximal 1200 °C, mit einem gewünschten C₅S₂$ (Kristall Z)-Gehalt von 5% - 75%. Jedoch zeigt laut diesem Dokument der hergestellte Spezialklinker kein zementartiges Verhalten und muss mit reaktiven hydraulischem Zement oder Zement vom Typ Portland gemischt werden, um gewünschte physikalischen Eigenschaften, wie zum Beispiel frühe Hydratation und hohe Frühfestigkeiten zu erzielen. Die Herstellung erfordert einen begrenzten Temperaturbereich von 900 °C bis maximal 1200 °C sowie ausgewählte Rohstoffe, namentlich Kalkstein, Bauxite, aluminiumreiche Tone, Sulfatträger (Anhydrit, Gips und Phosphorgips) und Kalziumfluorid bzw. Rohstoffe mit hohem Fluorgehalt, um die gewünschte reaktive Phase Kristall Y zu erhalten. Dem Fachmann ist bekannt, dass Fluorit, Bauxit und aluminiumreiche Tone als Rohstoffe sehr teuer sowie nur lokal begrenzt verfügbar sind.

Alternative Rohstoffe, wie zum Beispiel industrielle Nebenprodukte, die als Komponente der Rohmehlmischung des erfindungsgemäßen hydraulisch reaktiven Klinkers verwendet werden, sind EP 1 171 398 B1 nicht zu entnehmen. Ebenfalls ist dem Fachmann bekannt, dass kristalline Hochtemperaturphasen, welche typischerweise in industriellen Nebenprodukten, zum Beispiel, aber nicht ausschließlich, in Aschen und Schlacken, auftreten können, wie zum Beispiel, aber nicht ausschließlich, Vertreter der Melilith- und / oder Mullit-Gruppe, sich in einem Temperaturbereich von 900 °C bis 1200 °C bilden und sich dort üblicherweise nicht bzw. nur sehr langsam und / oder nur teilweise in gewünschte Phasen des Zielklinkers umsetzen.

Entgegen den Aussagen in EP 1 171 398 B1 kann bei bis zu 1200 °C nur unter Verwendung spezieller Rohstoffe (Kalkstein, Bauxit und sulfathaltige Ressourcen) und auch nur eine geringe Menge an Ye'elimit gebildet werden. Die Reaktivität des erfindungsgemäßen Klinkers erfordert die Anwesenheit von ausreichenden Mengen an Ternesit und Ye'elimit; damit erklärt sich die fehlende Reaktivität des nach EP 1 171 398 B1 erhaltenen Klinkers. Um die nötigen / gewünschten Mengen dieser Phase zu erzeugen, muss bei 1200 °C die Verweildauer in der heißen Zone dementsprechend deutlich verlängert werden. Die optimale Bildungstemperatur von C₄A₃$ liegt aber bei ∼1250°C.

Ein weiterer Nachteil des in EP 1 171 398 B1 genannten Brenntemperaturbereiches besteht in der Gegenwart / Bildung von kristallinen Hochtemperaturphasen, wie zum Beispiel C₂AS. Diese Phase kann bei einer maximalen Temperatur von 1200°C relativ lange nahezu unverändert / stabil vorliegen, wodurch ein signifikanter Anteil des Aluminiums ungewünscht gebunden wird. Bei Temperaturen über 1250°C werden solche unerwünschten Phasen in der Regel schneller umgesetzt / umgewandelt. Hierdurch wird der ökonomische und ökölogische Wert / Nutzen diverser Rohstoffe signifikant erhöht.

Die vorliegende Erfindung beschreibt dagegen diverse Rohstoffe, ein spezielles Herstellungsverfahren und die Zusammensetzung eines alternativen, hydraulisch reaktiven Klinkers, welcher sich deutlich vom Stand der Technik unterscheidet.

Für den erfindungsgemäßen Klinker können ein Vielzahl natürliche aber auch industrielle Materialien, wie zum Beispiel, aber nicht ausschließlich, Kalkstein, Bauxit, Ton / Tonstein, Basalte, Periodite, Dunite, Ingnimbrite, Karbonatite, Aschen / Schlacken / Hüttensande hoher und geringer Qualität (Mineralogie /Glasgehalt, Reaktivität, etc.), diverse Haldenmaterialien, Rot- und Braunschlämme, natürliche Sulfatträger, Entschwefelungsschlämme, Phosphorgips, etc., als Rohmaterial verwendet werden. Es fallen ebenfalls namentlich nicht genannte Stoffe / Stoffgruppen in den Schutzbereich, welche die chemischen Mindestanforderungen als potentielle Rohstoffe erfüllen.

Entgegen dem in EP 1 171 398 B1 beschriebenen Spezialklinker ist der erfindungsgemäße Klinker, gemahlen auf eine übliche Zementfeinheit, hydraulisch hoch reaktiv (z.B. hoher Wärmefluss, Verfestigung einhergehend mit der Bildung von AFₜ, AFₘ, C₂ASH₈, C-(A)-S-H, etc...), und zeigt, auch ohne die Zugabe anderer hydraulisch reaktiver Komponenten ein eindeutiges zementartiges Verhalten. Eine solche Zugabe ist jedoch möglich.

Ebenfalls weicht die Methodik der Klinkerherstellung signifikant ab und für die Herstellung des erfindungsgemäßen Bindemittels wird keine zusätzliche Fluorquelle benötigt, ohne dass die Verwendung einer solchen zwingend ausgeschlossen wäre. Die vorliegende Erfindung stellt somit eine signifikante Erweiterung der nutzbaren industriellen Nebenprodukt und Abfallstoffe dar.

Bei ersten Untersuchungen konnten verschiedene Klinker, welche die Phase C₅S₂$ in variierenden Mengen enthalten, aus Kalksteinen, Ton, Hüttensand /Stückschlacken und (W & V)-Flugaschen verschiedener Qualitäten hergestellt werden. Es hat sich des weiteren gezeigt, dass zum einen die kristalline Phasen in Kalksteinen (z.B. Diopsid, etc.) und Schlacken sowie Aschen (z.B. Mullit, Gehlenit, Åckermannit, Augit etc.) während des Brennprozesses bei Temperaturen von über 1200 °C und bis zu 1350 °C zu neuen Phasen (z.B. C₄(AₓF₁₋ₓ)3_{$}, C₂S, C₄AF, etc.) umgebildet werden und zum anderen, dass die chemische und mineralogische Zusammensetzung der Rohmehlmischung sowie die Brenn- und Kühlungsparameter einen signifikanten Einfluss auf die Klinkerzusammensetzung und -reaktivität ausüben.

Die obige Aufgabe wird daher auch gelöst, indem Materialien verschiedener Qualitäten als Rohstoffe zur Herstellung eines erfindungsgemäßen Ternesit-Belit-Calciumsulfoaluminat(Ferrit)-Klinker (TBC$A(F)) verwendet werden, sowie durch ein Verfahren zu seiner Herstellung, mit spezifische Brenn- und Kühlungsparametern.

Die gezielte Herstellung eines Calciumsulfoaluminat - Klinkers mit C₅S₂$ als hydraulisch reaktive Komponente, sowie eine gezielte Kühlungsprozedur zur Bildung und / oder Stabilisierung spezifischer Phasen, wie sie in dieser Erfindung beschrieben wird, ist dem Stand der Technik nicht zu entnehmen.

Für die erfindungsgemäßen Klinker können Rohstoffe, die CaO, Al₂O₃(±Fe₂O₃), SiO₂ und SO₃ als Hauptkomponente enthalten, verwendet werden. Ein Vorteil ist die Möglichkeit der Verwendung von industriellen Nebenprodukten als mindestens eine Hauptkomponente der Rohmehlmischung. Bevorzugt werden vor allem:
1) Industrielle Nebenprodukte insbesondere mit geringer Qualität (Aschen, Schlacken, etc...);
2) Materialien die Kalkstein als Haupt CaO-Quelle zumindest teilweise ersetzen können;
3) Materialien die Bauxit als Al₂O₃(Fe₂O₃)-Quelle zumindest teilweise ersetzen können;
4) SO₃ aus industriellen Prozessen,
5) natürliche Gesteine / Gesteinsgläser.

Materialien, wie z.B. industrielle Nebenprodukte, die als eine Haupt-Al₂O₃-Quelle verwendet werden, sollen einen Al₂O₃-Gehalt von mindestens 5 Gew.-%, vorzugsweise von ≥10 Gew.-% und noch stärker bevorzugt von ≥15 Gew.-% haben. Soweit im Folgenden von Materialien geringer Qualität die Rede ist, sind damit Materialien jedweden Ursprungs umfasst, die die Anforderung an den Al₂O₃ Gehalt erfüllen. Stückschlacken und W Aschen werden aufgrund ihrer Verfügbarkeit derzeit besonders bevorzugt.

Die Rohstoffe für die Herstellung des erfindungsgemäßen Ternesit-Belit-Calciumsulfoaluminat(Ferrit)-Klinkers (TBC$A(F)) werden in an sich bekannter Weise auf übliche Feinheiten gemahlen. Feinheiten von 1500 bis 10000 cm²/g nach Blaine, vorzugsweise von 2000 bis 4000 cm²/g sind besonders gut geeignet. Die Mahlfeinheit richtet sich in erster Linie nach der Art und Zusammensetzung des eingesetzten Rohstoffes, dem Brennprozess (Temperatur, Verweildauer in der Sinterzone, etc.) sowie den angestrebten Eigenschaften des Bindemittels und den zur Verfügung stehenden technischen Möglichkeiten.

Bei den verwendbaren Materialien kann es sich um natürliche Produkte und / oder industrielle Nebenprodukte handeln. Diese können, müssen aber nicht, vorbehandelt werden.

Der erfindungsgemäße Klinker kann in seinen Eigenschaften und seiner Zusammensetzung durch die Rohmehlzusammensetzung, die Gehalte an Korrektiven, die Brennbedingungen und die Regelung der Temperung / Vorkühlung so eingestellt werden, dass C₅S₂$ und anstelle von β-C₂S reaktive Modifikationen von C₂S, wie zum Beispiel α-Modifikationen, vermehrt auftreten. Die Rohmehlmischung muss eine Temperatur von mehr als 1200°C durchlaufen, so dass etwaige unerwünschte kristalline Hochtemperaturphasen (z.B. C₂AS) in gewünschte Phasen des Zielklinkers umgesetzt werden und eine ausreichende Menge C₄(AₓFe₁₋ₓ)₃$ gebildet wird. Jedoch geht damit ein wesentlicher Nachteil einher. Die gewünschte Phase C₅S₂$ ist ab einer Temperatur von über ±1180°C nicht stabil und zerfällt in C₂S und C$. Erfindungsgemäß wird daher die Sinterung bei über 1200 °C mit einer gezielten, gegenüber der üblichen Zeit verlangsamten Kühlung des Klinkers über einen Bereich von 1200°C bis 750°C, vorzugsweise von 1150°C bis 850°C und noch stärker bevorzugt von 1150°C bis 1080°C, kombiniert, um C₅S₂$ neben der Phase C₄(AₓFe₁₋ₓ)₃$ gezielt zu bilden. Überraschenderweise hat sich ein weiterer Vorteil dieses Temper-Verfahrens gezeigt. Durchläuft die Phase C₄(AₓFe₁₋ₓ)₃$ (gebildet bei mindestens über 1200°C) gezielt einen Bereich von 1150°C bis 1050°C, wird diese, durch die Konsumierung / Umwandlung von zum Beispiel C₄AF, C₂F, CF messbar eisenreicher und ihre Menge nimmt etwas zu.

Das erfindungsgemäße Verfahren zur Herstellung eines hydraulisch reaktiven Klinkers durch Sintern einer Rohmehlmischung, welche Quellen für CaO, Al₂O₃(Fe₂O₃), SiO₂ und SO₃ enthält, umfasst zunächst als ersten Schritt eine Umsetzung bzw. Sinterung der Rohmehlmischung in einem Temperaturbereich von > 1200 °C bis 1350 °C, vorzugsweise von 1250 bis 1300 °C, über einen Zeitraum, der ausreicht, um ein Klinkerzwischenprodukt zu erhalten. Typischerweise beträgt der Zeitraum 10 min bis 240 min, vorzugsweise 30 min bis 90 min. Das Klinkerzwischenprodukt wird dann in einem Temperaturbereich von 1200 °C bis zu einer unteren Grenze von 750 °C, vorzugsweise in einem Temperaturbereich von 1150 bis 850 °C, über eine Zeit getempert, die ausreicht, um die gewünschte Menge an C₅S₂$ zu erhalten, sowie eine gewisse Menge an Aluminat- und Ferratphasen und Reste der kristallinen Hochtemperaturphasen der Rohstoffe mit vorhandenem C$ zu zusätzlichem C₄(AₓF₁₋ₓ)₃$ und C₅S₂$ umzusetzen. Der Klinker sollte den Temperaturbereich zwischen 1200°C und 1050°C für einen Zeitraum von 10 min bis 180 min, vorzugsweise von 25 min bis 120 min und noch stärker bevorzugt von 30 min bis 60 min durchlaufen. Der Klinker kann während der Abkühlung den Bereich von 1050°C bis 750°C, vorzugsweise von 1050°C bis 850°C für einem Zeitraum von 5 min bis 120 min, vorzugsweise von 10 min bis 60 min durchlaufen. Abschließend wird der Klinker in an sich bekannter Weise rapide abgekühlt, so dass weitere Phasenumwandlungen verhindert werden.

Man erhält dadurch den erfindungsgemäßen Klinker mit den Hauptkomponenten C₄(AₓF₁₋ₓ)₃$, (α; β) C₂S und C₅S₂$ in folgenden Anteilen

| | | |
|---|---|---|
| ● | C₅S₂$ | 5 bis 75 Gew.-% |
| ● | C₂S | 1 bis 80 Gew.-% |
| ● | C₄(AₓF₁₋ₓ)₃$ | 5 bis 70 Gew.-% |
| ● | Nebenphasen | 0 bis 30 Gew.-%. |

Vorzugsweise liegen die Gewichtsverhältnisse der wichtigsten Phasen des erfindungsgemäßen Klinkers (C₄(AₓF₁₋ₓ)₃$, (α; β)C₂S, C₅S₂$) in folgenden Bereichen:
● C₄(AₓF₁₋ₓ)₃$ zu (α; β)C₂S = 1:16 - 70:1, bevorzugt 1:8 - 8:1 und besonders bevorzugt 1:5 - 5:1
● C₄(AₓF₁₋ₓ)₃$ zu C₅S₂$ = 1:15 - 14:1, bevorzugt 1:8-8:1 und besonders bevorzugt 1:5- 5:1
● C₅S₂$ zu (α; β)C₂S = 1:15 - 70:1, bevorzugt 1:8- 10:1 und besonders bevorzugt 1:4- 5:1
● C₄(AₓF₁₋ₓ)₃$ zu ((α; β)C₂S + C₅S₂$) = 1:16 - 10:1 1, bevorzugt 1:8 - 8:1 und besonders bevorzugt 1:4- 4:1

Der erfindungsgemäße Klinker wird dann analog zu den bekannten Klinkern zu Zement oder Bindemittelmischungen weiterverarbeitet.

Für die Rohmehlmischung werden natürliche Rohstoffe, wie Kalkstein, Bauxit, Ton / Tonstein, Basalt, Kimberlit, Ingnimbrit, Karbonatit, Anhydrit, Gips, etc. und/oder industrielle Nebenprodukte und Reststoffe, wie Halden- und Deponiematerial, Aschen und Schlacken sowohl hoher als auch geringer Qualität, keramische Reststoffe, Entschwefelungsschlämme und / oder Phosphorgipse als Quellen für CaO, Al₂O₃(Fe₂O₃), SiO₂ und SO₃, ausgewählt. Die Bezeichnung Al₂O₃(Fe₂O₃) bedeutet ebenso wie in der Angabe C₄(AₓF₁₋ₓ)₃$ für die Klinkerphase, dass Aluminium teilweise durch Eisen ersetzbar ist. Typischerweise liegt hauptsächlich Aluminium mit geringen Beimengungen von Eisen vor, es liegt aber im Rahmen der Erfindung erhebliche Mengen Eisen bis hin zu einem überwiegenden Gehalt an Eisen einzusetzen.

Als Al₂O₃(Fe₂O₃)-Quelle haben sich Bauxit, Ton und/oder industrielle Nebenprodukte und Reststoffe mit einem Al₂O₃-Gehalt von mindesten 5 Gew.-%, vorzugsweise ≥10 Gew.-% und besonders bevorzugt ≥15 Gew.-% bewährt.

Ausgewählte Rohstoffe, wie zum Beispiel, aber nicht ausschließlich, Aschen haben sich überraschenderweise als besonders geeignet erwiesen. Sie zeigten durchschnittlich einen erhöhten Phosphatgehalt von > 1,0 Gew.-% und führten auch bei relativ kurzer Verweildauer in einem Temperaturbereich von > 1200°C bis 850°C zu einer Bildung einer signifikanten Menge von sehr reaktivem C₅S₂$.

Die Nebenphasen, z.B. Kalziumsilikate, Sulfate, Kalziumaluminoferritphasen, Kalziumaluminate, Kalziumferrite, Spinelle, Vertreter der Melilith-Gruppe, Periklas, Freikalk, Quarz und/oder eine Glasphase, sind vorzugsweise in einem Anteil von 0,1 Gew.-% bis 30 Gew.-%, vorzugsweise von 5 Gew.-% bis 20 Gew.-% und besonders bevorzugt von 10 Gew.-% bis 15 Gew.-% vorhanden. Die Art und die Menge der einen oder mehreren Nebenphasen im Verhältnis zu den Hauptkomponenten kann durch die Gewichtsverhältnisse CaO/Al₂O₃(±Fe₂O₃), CaO/SiO₂ und den Anteil des Sulfatträgers in der Rohmehlmischung gesteuert werden.

Die Gehalte der Hauptoxide des Klinkers umfassen bevorzugt folgende Bereiche:

| | | |
|---|---|---|
| ● | CaO | 35 bis 65 Gew.-% |
| ● | Al₂O₃(Fe₂O₃) | 7 bis 45 Gew.-% |
| ● | SiO₂ | 5 bis 28 Gew.-% |
| ● | SO₃ | 5 bis 20 Gew.-%. |

Es ist von Vorteil, wenn der erfindungsgemäße Klinker einen Periklasgehalt von > 2 Gew.-% aufweist. Außerdem kann der Klinker ein oder mehrere sekundäre Elemente und / oder deren Verbindungen aus der Gruppe der Alkali- und Erdalkalimetalle und / oder der Übergangsmetalle und / oder Metalle und / oder der Halbmetalle und / oder der Nichtmetalle in einem Anteil von bis zu 20 Gew.-%, vorzugsweise von ≤ 15 Gew.-% und besonders bevorzugt von ≤ 10 Gew.-% enthalten.

Es hat sich gezeigt, dass industrielle Nebenprodukte und Prozessstäube als Korrektiv zur Einstellung der Rohmehlmischung gut geeignet sind.

Der Klinker wird zur Herstellung von Zement bzw. Bindemittelmischungen in an sich bekannter Weise mit oder ohne Sulfatträger auf übliche Zementfeinheiten (nach Blaine) von 2000 bis 10000 cm²/g, vorzugsweise von 3000 bis 6000 cm²/g und besonders bevorzugt von 4000 bis 5000 cm²/g gemahlen. Als Sulfatträger eignen sich besonders Alkali- und / oder Erdalkalisulfate, vorzugsweise in Form von Gips und / oder Halbhydrat und / oder Anhydrit.

Der gemahlene Klinker kann mit einem oder mit Mischungen anderer Stoffe, wie zum Beispiel, aber nicht ausschließlich, mit Portlandzement, geopolymerem Binder, Calciumaluminatzement, künstlichen und natürlichen Puzzolanen / latent hydraulischen Materialien, Kalksteinmehlen etc. oder mehreren davon, zu einer Bindemittelmischung kombiniert werden. Dies ist jedoch entgegen EP 1 171 398 B1 zum Erreichen einer brauchbaren hydraulischen Reaktivität nicht erforderlich, vielmehr zeigt der zu Zement gemahlenen Klinker allein die gewünschten hydraulische Reaktivität.

Der Zement bildet in Gegenwart von Wasser AFₜ- und AFₘ-Phasen sowie Al(OH)₃. Die fortschreitende Auflösung der C₅S₂$-Phase stellt einerseits zusätzliches Sulfat zur Verfügung, was wiederum AFₜ stabilisiert und eine mögliche Transformation zu AFₘ vermeidet / verringert, andererseits wird eine reaktive Form von C₂S freigesetzt, die mit Wasser aber auch mit dem verfügbaren Al(OH)₃ reagieren und C₂AS • 8 H₂O (Strälingit) sowie (N,C)-(A)-S-H bilden kann. Die Stabilisierung von AFₜ sowie der Verbrauch von Al(OH)₃ sowie die Verringerung der Porosität durch die Bildung von C₂AS • 8 H₂O und (N,C)-(A)-S-H des erfindungsgemäßen Zementes führt zu einer deutlichen Verbesserung der Dauerhaftigkeit zum Beispiel, aber nicht ausschließlich, durch die Verringerung der Gesamtporosität und / oder des verbundenen Porenraums und die Beständigkeit gegenüber einem möglichen Sulfatangriff.

Bei der Verarbeitung des erfindungsgemäßen Zementes bzw. eines diesen enthaltenden Bindemittels ist ein Wasser / Bindemittelwert von 0,2 bis 2 geeignet, bevorzugt von 0,4 bis 0,8 und besonders bevorzugt von 0,5 bis 0,72.

Der Zement bzw. die Bindemittelmischung daraus kann eines oder mehrere Zusatzmittel enthalten. Vorzugsweise enthält es einen oder mehrere Abbinde- und / oder Erhärtungsbeschleuniger, vorzugsweise ausgewählt unter Lithiumsalzen und -hydroxiden, anderen Alkalisalzen und -hydroxiden, Alkalisilikaten, Portlandzement und Calciumaluminatzement. Es ist weiter bevorzugt, wenn Betonverflüssiger und / oder Fließmittel, vorzugsweise auf Basis von Ligninsulfonaten, sulfoniertem Naphthalin-, Melamin- oder Phenolformaldehydkondensat, oder auf Basis von Acrylsäure- Acrylamidgemischen oder Polycarboxylatethern oder auf Basis von phosphatierten Polykondensaten, enthalten sind.

Der Zement bzw. eine Bindemittelmischung daraus eignet sich hervorragend zur Verfestigung von Altlasten. Hierbei ist ein Gehalt an adsorptiv wirksamen Zusatzstoffen, z.B. Zeolithen und / oder Ionenaustauscherharzen, bevorzugt. Bei der Immobilisierung von Schwermetallen in anorganischen Bindemitteln kann ein hoher pH-Wert von Vorteil sein, der die Bildung schwer löslicher Hydroxide begünstigt. Dies kann zum Beispiel, aber nicht ausschließlich, durch ein Mischen des erfindungsgemäßen Klinkers mit Portlandzement in einem Bindemittel realisiert werden.

Ein weiterer Vorteil der erfindungsgemäßen Zements bzw. der Bindemittelmischung daraus ist die Bildung verschiedener Phasen im Zuge der Hydratation (z.B. Ettringit [AFₜ], Monophasen [AFₘ], Metall-Metall Hydroxisalze [LDH], etc..) die verschiedene Schwermetalle sowie weitere Schadstoffe (zum Beispiel, Chloride, etc.) in ihrer Struktur einbauen und somit dauerhaft fixieren können.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiele

In Tabelle 3 sind die verwendeten Rohstoffe, mit denen die im folgenden beschriebenen Beispiele durchgeführt wurden, anhand ihrer oxidischen Hauptbestandteile und ihrer Mahlfeinheit charakterisiert. Tabelle 4 zeigt die mineralogische Phasenzusammensetzung der verwendeten industriellen Nebenprodukte.

Alle Klinker wurden für 1 h bei 1250 °C gesintert und als Vergleich anschließend entweder direkt auf Raumtemperatur heruntergekühlt oder durchliefen erfindungsgemäß im Ofen ein definiertes Kühlprogramm zur Temperung und wurden erst anschließend auf Raumtemperatur heruntergekühlt.

**Tabelle 3: Elementare Zusammensetzung der verwendeten Rohstoffe (RFA)**

| Rohstoff | | Kalkstein | Schlacken | | | Aschen | | | Sulfatträger | Al-Korr. | Metakaolin |
|---|---|---|---|---|---|---|---|---|---|---|---|
| Probe | | K1 | S1 | S2 | S3 | FA1 | FA2 | FA 3 | MicroA | Al(OH)₃ | MK |
| RFA | Einheit | | | | | | | | | | |
| GV 1050 °C | % | 43,09 | 0,00 | 0,00 | 1,15 | 3,48 | 0,82 | 2,79 | 4,64 | 34,64 | 1,91 |
| SiO₂ | % | 1,53 | 36,82 | 43,42 | 35,46 | 35,70 | 28,50 | 47,30 | 4,17 | 0,00 | 48,00 |
| Al₂O₃ | % | 0,35 | 11,72 | 11,40 | 12,99 | 21,8 | 12,5 | 27,70 | 1,36 | 65,36 | 41,60 |
| TiO2 | % | 0,03 | 0,88 | 0,64 | 0,70 | 1,21 | 1,05 | 1,38 | 0,04 | 0,00 | |
| MnO | % | 0,01 | 0,37 | 1,05 | 0,62 | 0,03 | 0,18 | 0,06 | 0,00 | 0,00 | |
| Fe₂O₃ | % | 0,19 | 0,52 | 1,43 | 0,26 | 6,22 | 5,18 | 6,29 | 0,37 | 0,00 | 1,80 |
| CaO | % | 54,50 | 38,61 | 37,36 | 37,81 | 25,80 | 37,4 | 7,84 | 37,40 | 0,00 | 5,70 |
| MgO | % | 0,22 | 7,75 | 2,62 | 7,74 | 1,34 | 4,81 | 2,31 | 1,82 | 0,00 | 0,10 |
| K₂O | % | 0,04 | 0,44 | 0,36 | 0,74 | 0,13 | 0,28 | 1,46 | 0,28 | 0,00 | 0,95 |
| Na₂O | % | 0,00 | 0,18 | 0,38 | 0,75 | 0,07 | 0,07 | 0,59 | 0,06 | 0,00 | |
| SO₃ | % | 0,01 | 2,70 | 1,11 | 1,58 | 3,96 | 7,71 | 0,29 | 49,80 | 0,00 | |
| P₂O₅ | % | 0,01 | 0,00 | 0,01 | 0,00 | 0,15 | 1,27 | 1,77 | 0 | 0,00 | |
| Summe | | 99,98 | 100,00 | 99,78 | 99,80 | 99,89 | 99,77 | 99,78 | 99,94 | 100,00 | 100,06 |
| | | | | | | | | | | | |
| Amorph | % | / | / | >95 | | 48,0 | 38,0 | 58,9 | / | / | |
| Dichte | g/cm³ | 2,64 | 2,82 | 2,82 | 2,81 | 2,59 | 2,82 | 2,3 | | | 2,54 |
| Mahlfeinheit nach Blaine | cm²/g | 3350 | 4700 | 3710 | 3900 | 6380 | 4380 | 4270 | | | |

**Tabelle 4: Mineralogische Phasenzusammensetzung der verwendeten industriellen Nebenprodukte (QXRD nach Rietveld)**

| Rohstoff | | Schlacken | | | Aschen | | |
|---|---|---|---|---|---|---|---|
| Probe | | S1 | S2 | S3 | FA1 | FA2 | FA3 |
| Mineral | Einheit | | | | | | |
| Kalzit | Gew.-% | | | 1,2 | 1,6 | | |
| Quarz | Gew.-% | 0,5 | 0,25 | | 7,5 | 11,5 | 9,8 |
| Cristobalit | Gew.-% | | | | 1,2 | 0,4 | |
| Freikalk | Gew.-% | | | | 2,4 | 9,3 | 0,9 |
| Periklas | Gew.-% | | | | | 2,8 | 1,1 |
| Anhydrit | Gew.-% | | | | 4,5 | 10,4 | 0,6 |
| Feldspäte | Gew.-% | | | | 8,0 | | |
| Akermanit | Gew.-% | 56,0 | | 18,3 | | | |
| Gehlenit | Gew.-% | 26,8 | | 8,9 | 8,9 | 6,3 | |
| Merwinit | Gew.-% | | 0,4 | 3,1 | | 4,9 | |
| Augit | Gew.-% | 14,6 | | | | | |
| Mullit | Gew.-% | 0,8 | | | 3,6 | | 25,1 |
| Maghemit | Gew.-% | | 0,14 | | 1,8 | 1,2 | 1,4 |
| Hematit | Gew.-% | | | | 2,4 | 0,9 | 0,8 |
| Rutil | Gew.-% | | | | | | 0,3 |
| Perowskit | Gew.-% | | | | 2,4 | | |
| Ye'elimit | Gew.-% | | | | 1,2 | 3,1 | |
| C₂S | Gew.-% | | | | 6,5 | 8,1 | 1,1 |
| C₄AF | Gew.-% | | | | | 3,1 | |
| C₅S₂$ | Gew.-% | 1,3 | | | | | |
| Amorph | Gew.-% | 0,00 | 99,21 | 68,5 | 48,0 | 38,0 | 58,9 |

### Beispiel 1

Die Rohmischung bestand aus 44 Gew.-% K1 + 25 Gew.-% FA1 + Sulfatträger und Al(OH)₃. Eine Probe (M1) wurde nach dem Sintern direkt abgekühlt, die zweite Probe (M1a) durchlief nach dem Sintern zur Temperung ein Kühlprogramm bei dem die Temperatur über ∼45 min von 1200°C auf 850°C gesenkt und der Klinker dann rapide an der Luft abgekühlt wurde.

### Beispiel 2

Die Rohmischung bestand aus 65 Gew.-% (80% K1/20% MK) + 5 Gew.-% FA3 + Sulfatträger und Al(OH)₃. Die Probe (M2) durchlief nach dem Sintern dasselbe Kühlprogramm wie M1a und wurde dann abgekühlt.

### Beispiel 3

Die Rohmischung bestand aus 45 Gew.-% K1 + 35 Gew.-% S2 + Sulfatträger und Al(OH)₃. Eine Probe (L1) wurde nach dem Sintern direkt abgekühlt, die zweite Probe (L1a) durchlief nach dem Sintern dasselbe Kühlprogramm wie M1a und wurde dann abgekühlt, die dritte Probe (L1b) durchlief nach dem Sintern ein Kühlprogramm bei dem die Temperatur über ∼60 min von 1150°C auf 1100°C gesenkt und der Klinker dann rapide an der Luft abgekühlt wurde.

### Beispiel 4

Die Rohmischung bestand aus 37 Gew.-% K1 + 54 Gew.-% FA2 + Sulfatträger und Al(OH)₃. Eine Probe (L2) wurde nach dem Tempern direkt abgekühlt, die zweite Probe (L2a) durchlief nach dem Tempern dasselbe Kühlprogramm wie L1 b und wurde dann abgekühlt.

### Beispiel 5

Die Rohmischung bestand aus 41 Gew.-% K1 + 41 Gew.-% S1 + Sulfatträger und Al(OH)₃. Eine Probe (L3) wurde nach dem Sintern direkt abgekühlt, die zweite Probe (L3a) durchlief nach dem Sintern dasselbe Kühlprogramm wie M1a und wurde dann abgekühlt.

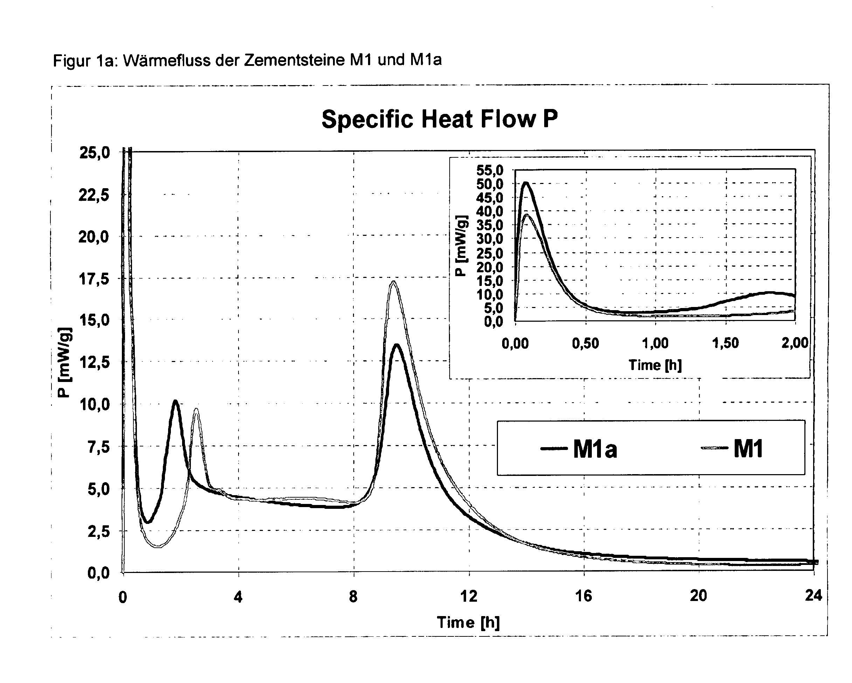

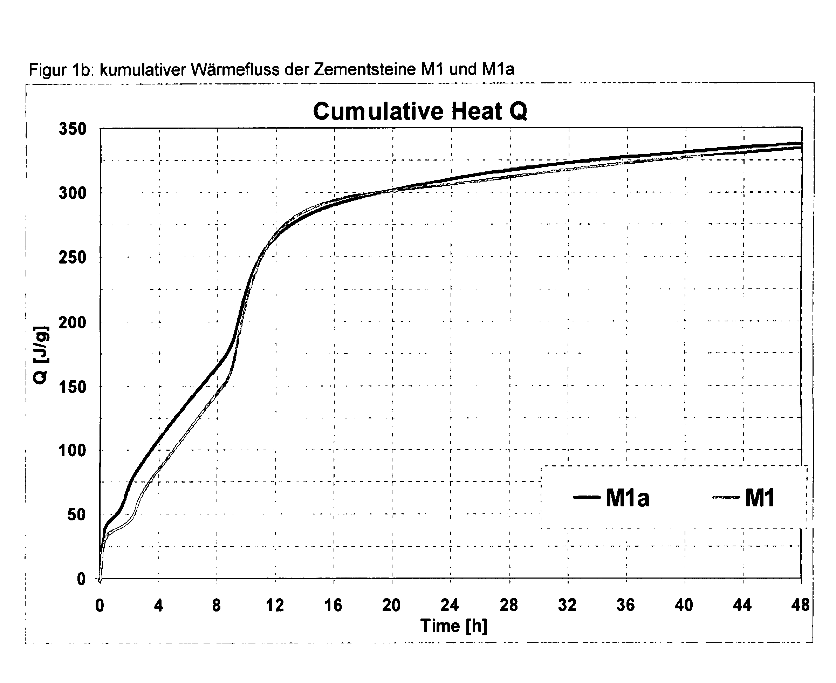

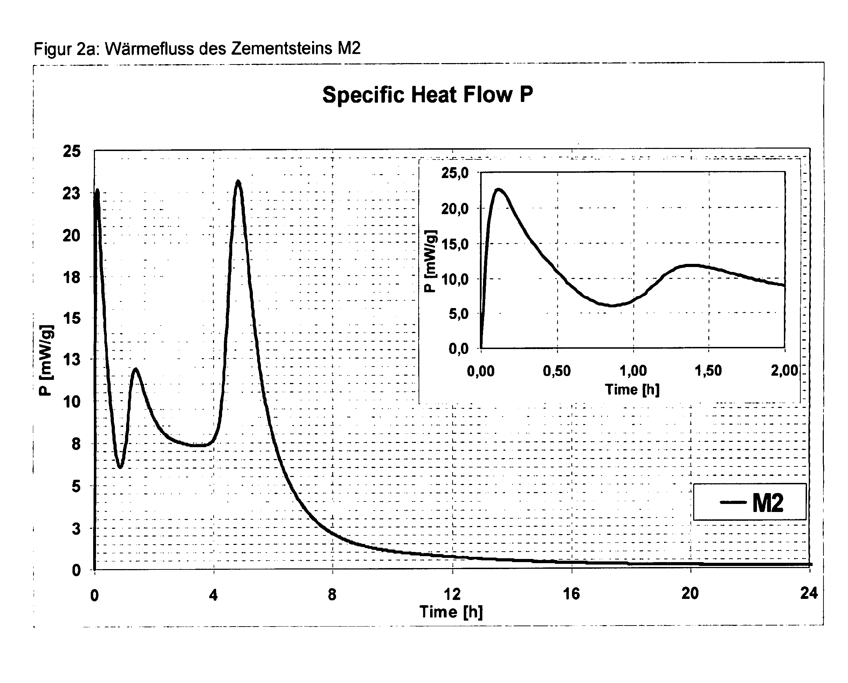

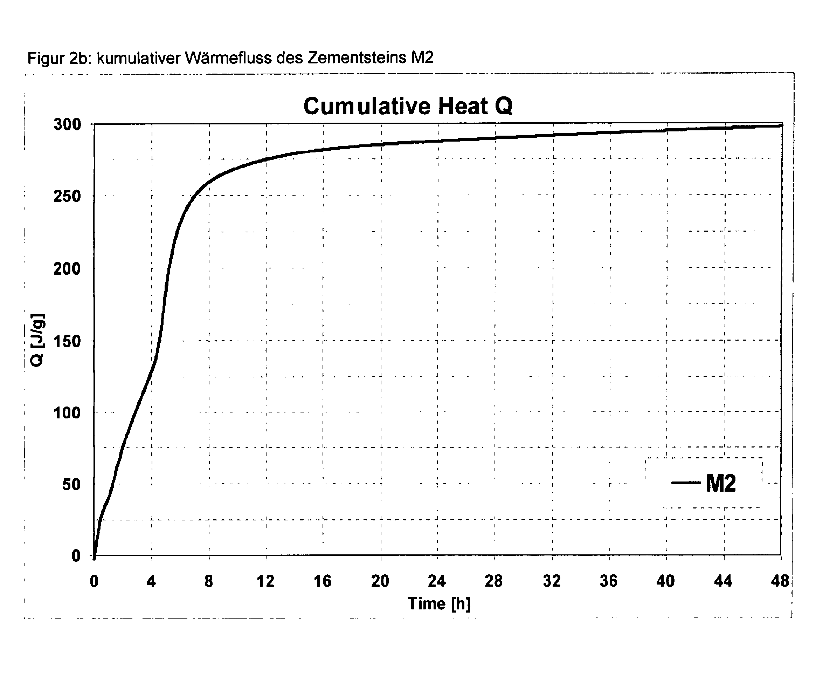

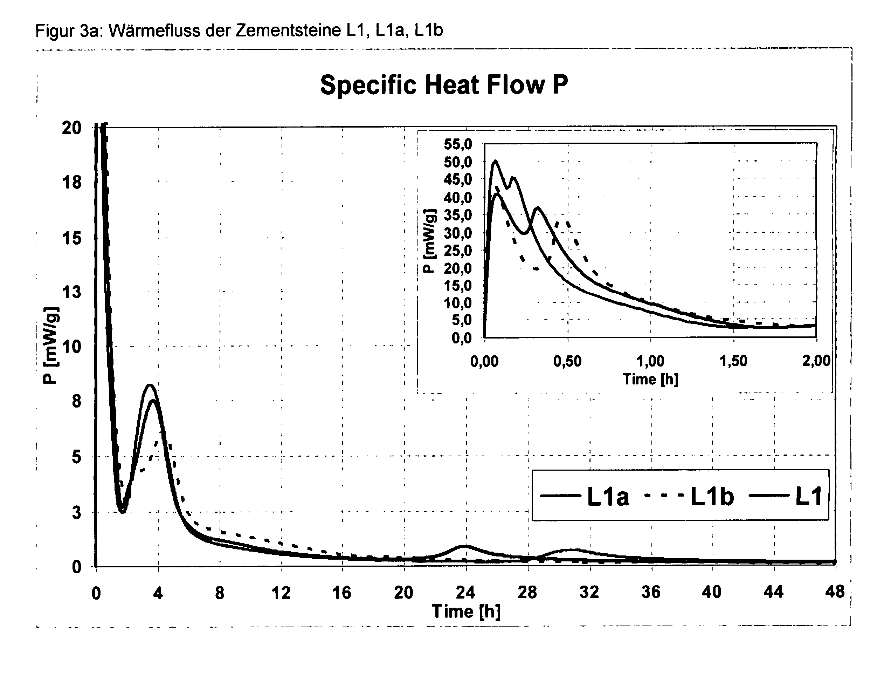

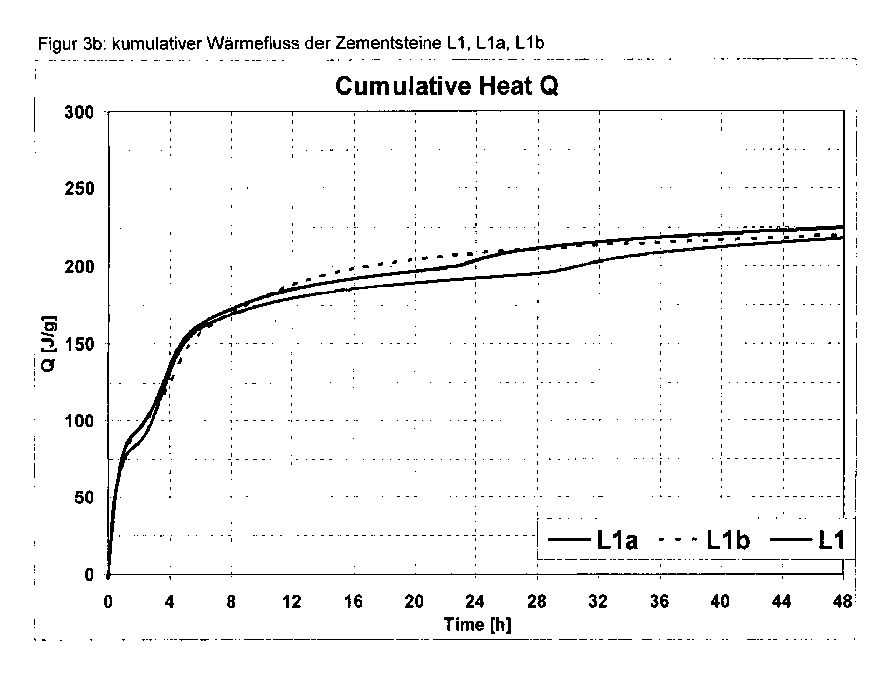

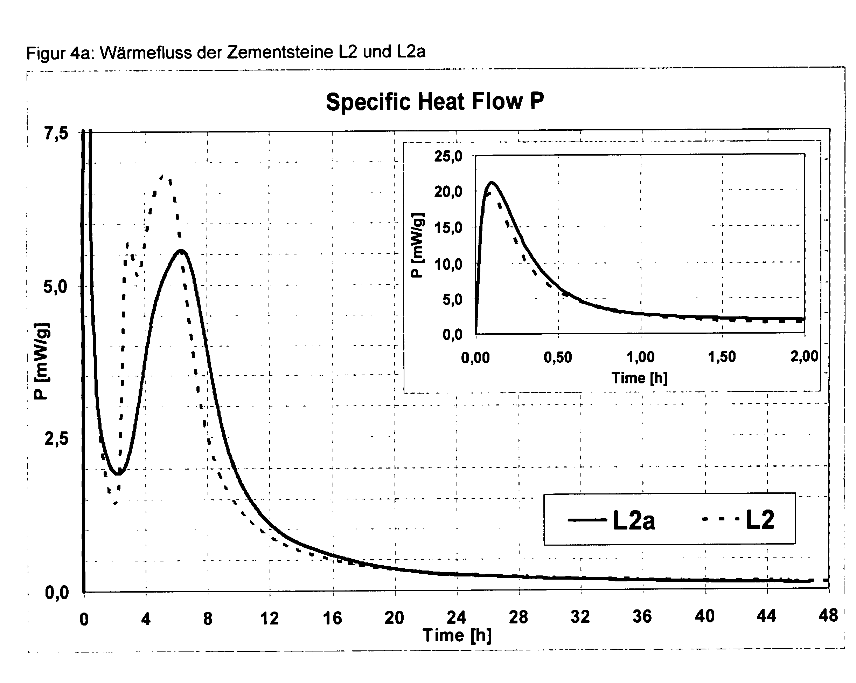

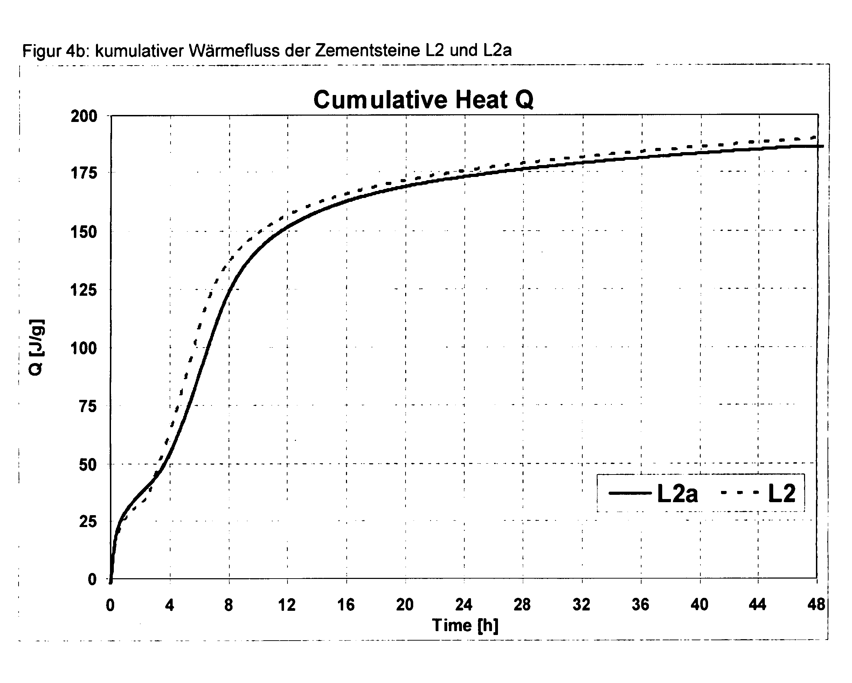

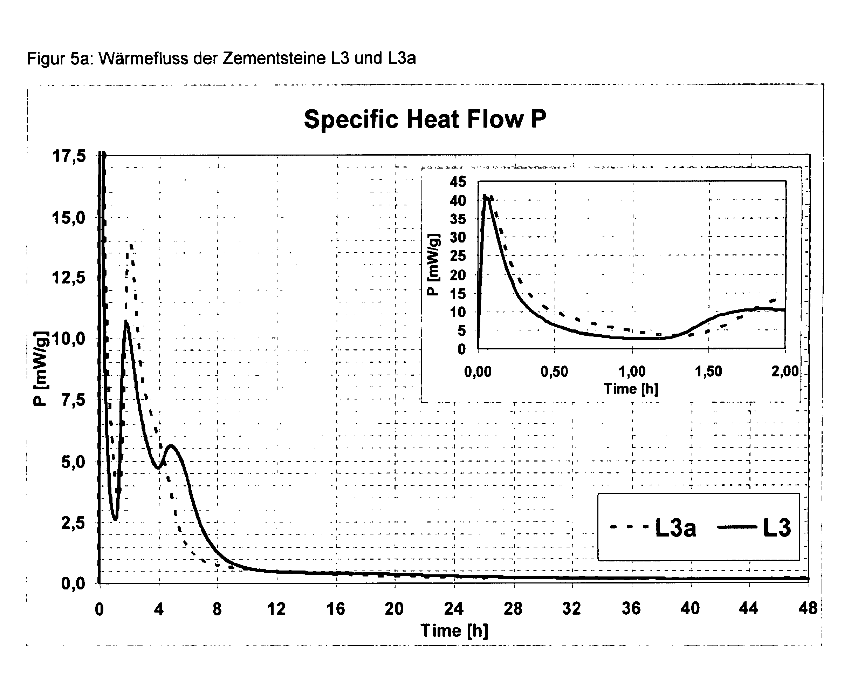

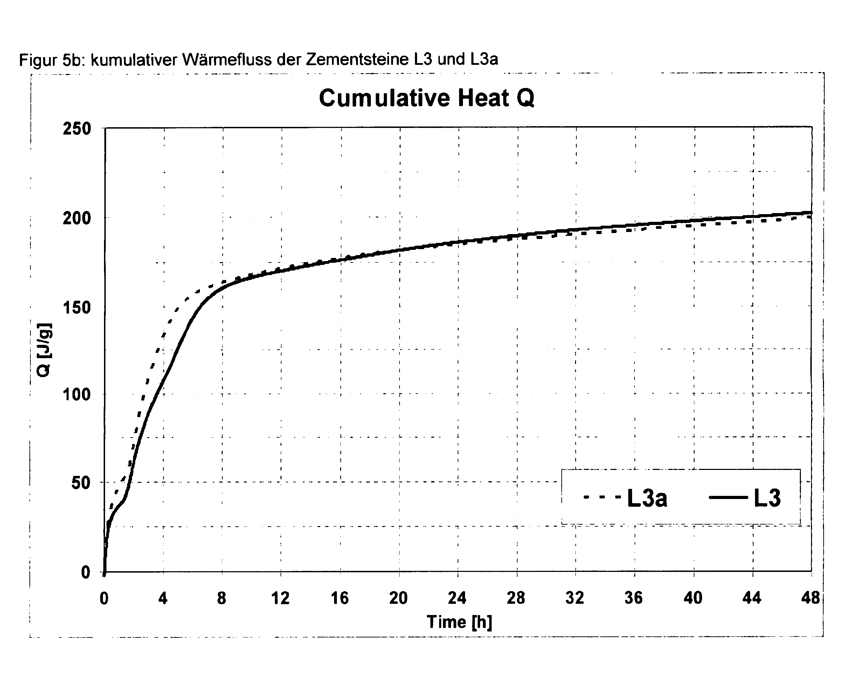

Die Analyseergebnisse für die Klinker und die Zementsteine, die aus einem Gemisch von 85 Gew.-% des Klinkers und 15 Gew.-% Anhydrit mit einem Wasser/Zementwert von 0,7 hergestellt wurden, sind in Tabelle 5 zusammengestellt. In den Figuren 1 bis 5 sind Wärmeflussmessungen für die Zemente dargestellt.

**Tabelle 5: QXRD Daten (nach Rietveld) der Klinker sowie der daraus hergestellten Zementsteine**

| Probe | Klinker | | | Zementstein | | | | | | | |
|---|---|---|---|---|---|---|---|---|---|---|---|
| | C₂S [Gew.-%] | C₄A₃$ [Gew.-%] | C₅S₂$ [Gew.-%] | physikalisch gebundenes Wasser(40°C) [Gew.-%] | chemisch gebundenes Wasser [Gew.-%] | C₂S [Gew.-%] | C₄A₃$ [Gew.-%] | C₅S₂$ [Gew.-%] | AFt [Gew.-%] | C₂ASH₈ [Gew.-%] | amorph [Gew.-%] |
| M1 | 45 | 39 | 1 | 14 | 30,8 | 20 | | | 35 | 2 | 39 |
| M1a | 42 | 42 | 5 | 12,8 | 31,8 | 14 | | | 26 | 5 | 51 |
| M2 | 23 | 44 | 26 | | | 30 | | 12 | 22 | | 32 |
| L1 | 59 | 21 | 2 | 24 | 21,4 | 34 | | | 27 | | 24 |
| L1a | 58 | 22 | 2 | 23,4 | 22,6 | 34 | | | 31 | | 24 |
| L1b | 46 | 22 | 19 | 23,6 | 22,1 | 27 | | 7 | 29 | | 26 |
| L2 | 30 | 23 | 31 | | | | | | | | |
| L2a | 20 | 24 | 42 | | | | | | | | |
| L3 | 63 | 22 | 1 | | | | | | | | |
| L3a | 55 | 23 | 12 | | | | | | | | |

## Patentansprüche

1. Verfahren zur Herstellung eines hydraulisch reaktiven Klinkers durch Sintern einer Rohmehlmischung, welche Quellen für CaO, Al₂O₃(Fe₂O₃), SiO₂ und SO₃ enthält,
**dadurch gekennzeichnet, dass** man
die Rohmehlmischung in einem Temperaturbereich von > 1200 °C bis 1350 °C über einen Zeitraum sintert, der ausreicht, um die Rohmehlmischung zu einem Klinkerzwischenprodukt umzusetzen,
das Klinkerzwischenprodukt in einem Temperaturbereich von 1200 °C bis zu einer unteren Grenze von 750 °C über eine Zeit tempert, die ausreicht, um die gewünschte Menge an C₅S₂$ zu erhalten, sowie eine gewisse Menge an Aluminat- und Ferratphasen und Reste der kristallinen Hochtemperaturphasen der Rohstoffe mit vorhandenem C$ zu zusätzlichen C₄(AₓF₁₋ₓ)$ und C₅S₂$ umzusetzen,
und den Klinker mit den Hauptkomponenten C₄(AₓF₁₋ₓ)₃$, (α; β) C₂S und C₅S₂$ in folgenden Anteilen
| | | |
|---|---|---|
| ● | C₅S₂$ | 5 bis 75 Gew.-% |
| ● | C₂S | 1 bis 80 Gew.-% |
| ● | C₄(AₓF₁₋ₓ)₃$ | 5 bis 70 Gew.-% |
| ● | Nebenphasen | 0 bis 30 Gew.-% |
abkühlt.

2. Verfahren nach Anspruch 1, **dadurch gekennzeichnet, dass** man für die Rohmehlmischung natürliche Rohstoffe, wie Kalkstein, Bauxit, Ton /Tonstein, Basalt, Kimberlit, Ingnimbrit, Karbonatit, Anhydrit, Gips, etc. und/oder industrielle Nebenprodukte, wie Halden- und Deponiematerial, Aschen und Schlacken sowohl hoher als auch geringer Qualität, keramische Reststoffe, Entschwefelungsschlämme und / oder Phosphorgipse als Quellen für CaO, Al₂O₃(Fe₂O₃), SiO₂ und SO₃, auswählt.

3. Verfahren gemäß Anspruch 2, **dadurch gekennzeichnet, dass** man als Al₂O₃(Fe₂O₃)-Quelle Bauxit, Ton und/oder industrielle Nebenprodukte und Reststoffe mit einem Al₂O₃(Fe₂O₃)-Gehalt von mindestens 5 Gew.-%, vorzugsweise von ≥10 Gew.-% und besonders bevorzugt von ≥15 Gew.-% auswählt.

4. Verfahren gemäß mindestens einem der Ansprüche 1 bis 3, **dadurch gekennzeichnet, dass** die Art und die Menge einer oder mehrerer Nebenphasen durch die Gewichtsverhältnisse CaO/Al₂O₃(Fe₂O₃), CaO/SiO₂ und den Anteil des Sulfatträgers in der Rohmehlmischung gesteuert wird, wobei die Nebenphasen, zum Beispiel Kalziumsilikate, Sulfate, Kalziumaluminoferritphasen, Kalziumaluminate, Kalziumferrite, Spinelle, Vertreter der Melilith-Gruppe, Periklas, Freikalk, Quarz und/oder eine Glasphase, in einem Anteil von 0,1 bis 30 Gew.-%, vorzugsweise von 5 bis 20 Gew.-% und besonders bevorzugt von 10 bis 15 Gew.-% vorliegen.

5. Verfahren gemäß mindestens einem der Ansprüche 1 bis 4, **dadurch gekennzeichnet, dass** der hydraulisch reaktive Klinker ein oder mehrere sekundäre Elemente und / oder deren Verbindungen aus der Gruppe der Alkali- und Erdalkalimetalle und / oder der Übergangsmetalle und / oder Metalle und / oder der Halbmetalle und / oder der Nichtmetalle in einem Anteil von bis zu 20 Gew.-%, vorzugsweise von ≤ 15 Gew.-% und besonders bevorzugt von ≤ 10 Gew.-% enthält.

6. Verfahren gemäß mindestens einem der Ansprüche 1 bis 5, **dadurch gekennzeichnet, dass** industrielle Nebenprodukte und Prozessstäube als Korrektiv zur Einstellung der Rohmehlmischung verwendet werden.

7. Verfahren gemäß mindestens einem der Ansprüche 1 bis 6, **dadurch gekennzeichnet, dass** die Rohmehlmischung auf Feinheiten (nach Blaine) von 1500 bis 10000 cm²/g, vorzugsweise von 2000 bis 4000 cm²/g gemahlen wird.

8. Verfahren gemäß mindestens einem der Ansprüche 1 bis 9, **dadurch gekennzeichnet, dass** die Rohmehlzusammensetzung, die Gehalte an Korrektiven, die Brennbedingungen und die Regelung der Temperung so gewählt werden, dass C₅S₂$ und anstelle von β-C₂S reaktive Modifikationen von C₂S, wie zum Beispiel α-Modifikationen, vermehrt auftreten.

9. Verfahren gemäß mindestens einem der Ansprüche 1 bis 10, **dadurch gekennzeichnet, dass** der Klinker mit oder ohne Sulfatträger, in Form von Alkali- und / oder Erdalkalisulfaten, vorzugsweise in Form von Gips und /oder Halbhydrat und / oder Anhydrit, auf Feinheiten (nach Blaine) von 2000 bis 10000 cm²/g, vorzugsweise von 3000 bis 6000 cm²/g und besonders bevorzugt von 4000 bis 5000 cm²/g gemahlen wird.

10. Zement erhältlich durch Mahlen eines Klinkers gemäß mindestens einem der Ansprüche 1 bis 9.

11. Bindemittel **dadurch gekennzeichnet, dass** es einen Zement gemäß Anspruch 10 als hydraulisch reaktive Komponente umfasst.

12. Bindemittel gemäß Anspruch 11, **dadurch gekennzeichnet, dass** der Zement mit zum Beispiel Portlandzement, Geopolymer Binder, Calciumaluminatzement, künstlichen und natürlichen Puzzolanen / latent hydraulischen Materialien, Kalksteinmehlen etc. gemischt ist.

13. Verwendung eines Zementes gemäß Anspruch 10 oder eines Bindemittels gemäß Anspruch 11 oder 12 in Kombination mit verschiedenen inerten Materialien, wie zum Beispiel Sand und / oder Kies zur Herstellung von Beton und Mörtel.

14. Verwendung eines Zementes oder Bindemittels gemäß Anspruch 13zur Immobilisierung von Schadstoffen oder als Dichtwandmasse.

15. Verwendung gemäß Anspruch 14, **dadurch gekennzeichnet, dass** das Bindemittel adsorptiv wirksame Zusatzstoffe, z.B. Zeolithe und / oder Ionenaustauscherharze, enthält.
